# FASCICULE DE BREVET EUROPEEN

(11) **EP 2 001 732 B1**
(45) Date de publication et mention de la délivrance du brevet: **02.06.2010**
(21) Numéro de dépôt: 07731800.4
(22) Date de dépôt: 22.03.2007
(51) Int. Cl.: B62D 65/02, B62D 65/04

(54) **PROCEDE DE MONTAGE SUR UN VEHICULE AUTOMOBILE D'ELEMENTS DE SOUBASSEMENT**
VERFAHREN ZUR BEFESTIGUNG VON UNTERBAUELEMENTEN AN EINEM KRAFTFAHRZEUG
METHOD FOR MOUNTING UNDERBODY ELEMENTS ON A MOTOR VEHICLE

(30) Priorité: 06.04.2006 FR 0651228
(43) Date de publication de la demande: 17.12.2008
(73) Titulaire: Renault SAS, 92100 Boulogne Billancourt (FR)
(72) Inventeur: BOGAERT, Philippe, F-78490 Les Mesnuls (FR); FLANDIN, Michael, F-28410 Broue (FR)
(74) Mandataire: Guyon, Rodolphe C.
(86) Numéro de dépôt international: PCT/FR2007/050987
(87) Numéro de publication internationale: WO 2007/116165

(56) Documents cités:
- EP-A1- 0 171 576
- EP-A1- 0 477 702
- EP-A2- 0 278 479
- FR-A1- 2 838 094
- FR-A1- 2 870 197

## Description

L'invention concerne un procédé de montage, sur un véhicule automobile, d'éléments de soubassement et d'une face avant technique destinée à être montée à une extrémité d'un élément de structure avant du véhicule comprenant des longerons.

Il est connu de monter des éléments de soubassement d'un véhicule de bas en haut selon une direction verticale.

On peut aussi dans le même temps monter une face avant technique du véhicule en la mettant en préparation sur un support lui-même posé sur l'outillage permettant le montage des éléments de soubassement. La face avant technique est donc elle aussi montée selon la direction verticale. C'est par exemple le cas de la face avant technique décrite dans le document FR-A-2838094 qui est montée selon la direction verticale pure.

Cependant, ce type de montage présente des inconvénients. En effet, pour que ce type de montage soit possible il faut que la face avant technique puisse passer entre les longerons, ce qui n'est pas possible si sa dimension transversale est supérieure à l'écart entre les longerons. D'autre part, ce procédé nécessite un indexage de la face avant technique par rapport aux longerons, sachant que les jeux entre la face avant et les longerons sont très réduits. Enfin, dans le cas où la face avant technique porte sur sa partie supérieure des éléments dépassant de la distance inter longerons, la face avant technique ne peut passer selon le sens vertical.

Afin de pallier ces inconvénients, l'invention a pour objet un procédé permettant le montage à la fois d'éléments de soubassement et d'une face avant technique de grandes dimensions, et ne nécessitant que peu de modifications de l'outillage existant.

L'invention a aussi pour objet un dispositif pour la mise en oeuvre de ce procédé.

A cet effet, l'invention propose un procédé de montage d'une face avant technique et d'éléments de soubassement du type cité ci-dessus, **caractérisé en ce que :**
- dans une première étape, la face avant technique est positionnée sur l'un des éléments de soubassement,
- dans une deuxième étape, la face avant technique passe par un pivotement autour d'un axe transversal d'une position dans laquelle elle s'étend sensiblement transversalement à une position dans laquelle elle est basculée vers l'avant,
- dans une troisième étape, les éléments du soubassement et la face avant technique en position basculée sont déplacés verticalement de bas en haut jusqu'au véhicule, et
- dans une quatrième étape, la face avant technique est rabattue de sa position basculée à sa position normale dans laquelle elle est en vis-à-vis de l'élément de structure avant du véhicule.

Selon d'autres caractéristiques de l'invention:
- Avant la quatrième étape, il est prévu une étape intermédiaire dans laquelle la face avant technique est prémaintenue en position basculée.
- L'élément de soubassement portant la face avant technique est une traverse inférieure destinée à être fixée sous l'élément de structure avant, à l'extrémité des longerons.
- Il est prévu une cinquième étape dans laquelle la face avant technique est fixée aux longerons.

L'invention propose aussi un dispositif pour la mise en oeuvre du procédé ci-dessus qui comporte au moins :
- un outil de montage mobile verticalement destiné à recevoir les éléments de soubassement et la face avant technique
- un moyen de maintien de la face avant technique en position basculée.

Selon une autre caractéristique du dispositif selon l'invention, le moyen de maintien de la face avant technique est au moins un bras mobile apte à rabattre automatiquement la face avant technique en position normale lors de la quatrième étape du procédé.

D'autres caractéristiques et avantages de l'invention apparaîtront à la lecture de la description d'exemples de réalisation d'un procédé de montage d'une face avant technique et d'éléments de soubassement en référence aux dessins annexés dans lesquels :
- La figure 1 représente une première étape du procédé de montage.
- La figure 2 représente une deuxième étape du procédé de montage.
- La figure 3 représente une troisième étape du procédé de montage.
- La figure 4 représente une quatrième étape du procédé de montage.

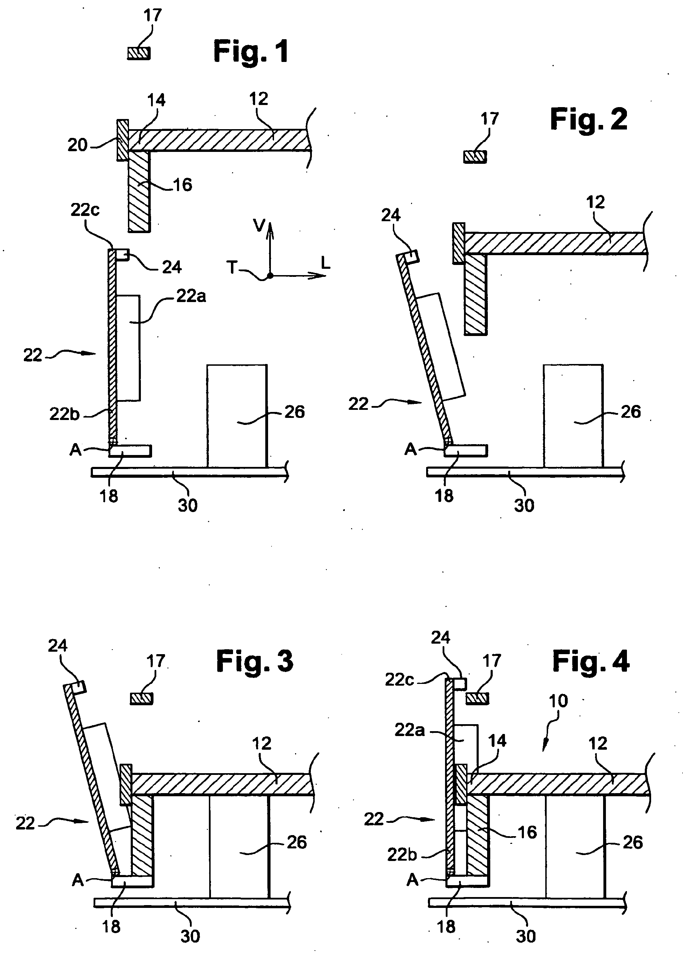

Dans la description qui suit, nous prendrons à titre non limitatif une orientation longitudinale, verticale et transversale indiquée par le trièdre L,V,T de la figure 1, et une orientation d'avant et d'arrière correspondant au sens de déplacement du véhicule.

Le véhicule présente une symétrie générale par rapport à un plan longitudinal.

Tel que représenté à la figure 4, un véhicule (non représenté) comporte, en position montée finale, un élément de structure avant 10 comprenant au moins deux longerons longitudinaux 12 (un seul est représenté sur les figures) sous les extrémités 14 desquels s'étendent des éléments verticaux 16 appelés « pendeloques ».

L'avant du véhicule comporte également, une traverse supérieure 17 s'étendant au dessus des longerons 12 et comportant, en particulier des supports de projecteurs du véhicule.

Après montage, les pendeloques 16 sont reliées par une traverse inférieure 18, et une extrémité avant 20 de l'élément de structure avant 10 reçoit une face avant technique 22.

La face avant technique 22 s'étend selon un plan transversal et est destinée à supporter des équipements du véhicule tels que des projecteurs, des câblages, un module de refroidissement, par exemple. La face avant technique 22 participe également à la raideur de la structure du véhicule.

La face avant technique 22 comporte une partie 22a s'étendant entre les longerons 12 et une partie 22b, plus large que la partie 22a, s'étendant devant les longerons 12.

Un bord supérieur 22c de la face avant technique 22 peut comporter des éléments 24 s'étendant vers l'arrière du véhicule.

Le montage de la face avant technique 22 s'effectue en même temps que le montage d'autres éléments 26 du soubassement du véhicule comme, par exemple, des trains roulants, une ligne d'échappement, des écrans thermiques, la traverse inférieure 18, etc..

Tel que représenté à la figure 1, dans une première étape, les éléments du soubassement sont placés sur une plateforme d'un outil de montage 30 se trouvant en dessous du véhicule. La position des éléments de soubassement sur l'outil 30 est déterminée en fonction de l'emplacement qu'ils doivent occuper sur le véhicule. La face avant technique 22, déjà munie de ses équipements, est disposée verticalement sur la traverse inférieure 18 par l'intermédiaire, par exemple, de plots (non représentés), portés par ladite traverse et coopérant avec des orifices (non représentés) ménagés dans la traverse inférieure 18.

Tel que représenté à la figure 2, dans une deuxième étape du procédé, la face avant technique 22 pivote autour d'un axe transversal A vers une position dans laquelle elle est basculée vers l'avant du véhicule. Les plots présentent une élasticité suffisante pour permettre un pivotement d'environ une dizaine de degré de la face avant technique 22. L'outil 30 peut aussi comporter des bras (non représentés) permettant le basculement automatisé de la face avant technique 22 ainsi que son maintien en position basculée durant le processus de montage.

Tel que représenté à la figure 3, dans une troisième étape du procédé, l'outil 30 procède au déplacement de bas en haut selon une direction verticale des éléments de soubassement 26 et de la face avant technique 22, maintenue en position basculée. L'ampleur du pivotement de la face avant technique 22 est prévu pour que durant le déplacement vertical, la face avant technique 22 passe le long de l'extrémité avant (20) de l'élément de structure (10) du véhicule, sans qu'il n'y ait de contact entre la face avant technique 22 et la structure (10). En fin de déplacement vertical, les éléments 26 sont prêts à être fixés sur le véhicule. La traverse inférieure 18 se trouve alors contre la partie inférieure des extrémités 14 des longerons 12 et la face avant technique 22 se trouve alors en vis-à-vis des extrémités 14 des longerons 12.

Tel que représenté à la figure 4, dans une quatrième étape du procédé, la face avant technique 22 a pivoté en direction de l'arrière du véhicule de façon qu'elle occupe une position dans laquelle la partie 22b est entre les longerons 12 et la partie 22a s'étend le long des extrémités des longerons 12. En fin de basculement de la face avant technique 22, les éléments saillants 24 passent au-dessus de la traverse supérieure 17.

Le basculement de la face avant technique 22 peut être manuel ou automatisé. Dans le deuxième cas du basculement automatisé, le basculement peut être effectué par le bras se trouvant sur l'outillage.

Ensuite, les éléments de soubassement 26, la traverse inférieure 18 et la face avant technique 22 sont alors prêts à être fixés sur le véhicule dans des étapes ultérieures..

Avant la quatrième étape, il peut être prévu une étape intermédiaire pendant laquelle la face avant technique 22 est maintenue en position basculée de façon à permettre, par exemple, des opérations de montage à l'intérieur du compartiment moteur. A cette fin, la face avant technique 22 peut comporter, par exemple, des pattes de maintien aptes à coopérer avec les longerons.

Le procédé selon l'invention présente donc l'avantage de permettre le montage de la face avant technique 22 en même temps que les autres éléments du soubassement, sans avoir à modifier l'outillage déjà existant de manière importante, même si la face avant technique 22 est de grandes dimensions.

De plus, la traverse inférieure 18 étant déjà indexée par rapport au véhicule, il n'est pas nécessaire de prévoir un indexage de la face avant technique 22 par rapport au véhicule.

## Revendications

1. Procédé de montage, sur un véhicule automobile, d'éléments de soubassement et d'une face avant technique (22) destinée à être montée à une extrémité (20) d'un élément de structure avant (10) du véhicule comprenant des longerons (12),
**caractérisé en ce que :**
- dans une première étape, la face avant technique (22) est positionnée sur l'un des éléments de soubassement,
- dans une deuxième étape, la face avant technique (22) passe par un pivotement autour d'un axe transversal (A) d'une position dans laquelle elle s'étend sensiblement transversalement à une position dans laquelle elle est basculée vers l'avant,
- dans une troisième étape, les éléments du soubassement et la face avant technique (22) en position basculée sont déplacés verticalement de bas en haut jusqu'au véhicule, et
- dans une quatrième étape, la face avant technique (22) est rabattue de sa position basculée à sa position normale dans laquelle elle est en vis-à-vis de l'élément de structure avant (10) du véhicule.

2. Procédé de montage selon la revendication 1, **caractérisé en ce que,** avant la quatrième étape, il est prévu une étape intermédiaire dans laquelle la face avant technique (22) est prémaintenue en position basculée.

3. Procédé de montage selon la revendication 1, **caractérisé en ce que** l'élément de soubassement portant la face avant technique (22) est une traverse inférieure (18) destinée à être fixée sous l'élément de structure avant (10), à l'extrémité des longerons (12).

4. Procédé de montage selon l'une quelconque des revendications précédentes, **caractérisé en ce qu'**il est prévu une cinquième étape dans laquelle la face avant technique (22) est fixée aux longerons (12).

5. Dispositif pour la mise en oeuvre du procédé selon l'une quelconque des revendications précédentes, **caractérisé en ce qu'**il comporte au moins :
- un outil de montage (30) mobile verticalement destiné à recevoir les éléments de soubassement et la face avant technique (22)
- un moyen de maintien de la face avant technique (22) en position basculée

6. Dispositif selon la revendication 5, **caractérisé en ce que** le moyen de maintien de la face avant technique (22) est au moins un bras mobile apte à rabattre automatiquement la face avant technique en position normale lors de la quatrième étape du procédé.

## Claims

1. Mounting method for mounting on a motor vehicle underbody elements and a technical front end (22) that is intended to be mounted at one end (20) of a front structural element (10) of the vehicle comprising side rails (12),
**characterized in that:**
- in a first step, the technical front end (22) is positioned on one of the underbody elements,
- in a second step, the technical front end (22) is pivoted about a transverse axis (A) from a position in which it runs substantially transversely into a position in which it is tilted forward,
- in a third step, the underbody elements and the technical front end (22) in the tilted position are moved vertically upward as far as the vehicle, and
- in a fourth step, the technical front end (22) is angled back from its tilted position into its normal position in which it faces the front structural element (10) of the vehicle.

2. Mounting method according to Claim 1,
**characterized in that,** before the fourth step, there is an intermediate step in which the technical front end (22) is already held in the tilted position.

3. Mounting method according to Claim 1,
**characterized in that** the underbody element bearing the technical front end (22) is a lower cross member (18) intended to be fixed under the front structural element (10) at the end of the side rails (12).

4. Mounting method according to any one of the preceding claims, **characterized in that** there is a fifth step in which the technical front end (22) is fixed to the side rails (12).

5. Device for implementing the method according to any one of the preceding claims, **characterized in that** it involves at least:
- a vertically mobile mounting fixture (30) intended to accept the underbody elements and the technical front end (22),
- a means of keeping the technical front end (22) in the tilted position.

6. Device according to Claim 5, **characterized in that** the means of holding the technical front end (22) is at least one mobile arm able automatically to angle the technical front end back into the normal position during the fourth step of the method.

## Patentansprüche

1. Verfahren zur Montage von Unterbauelementen und einer technischen Vorderfläche (22) an einem Kraftfahrzeug, wobei die technische Vorderfläche (22) dazu bestimmt ist, an einem Ende (20) eines Längsträger (12) umfassenden vorderen Strukturelements (10) des Fahrzeugs montiert zu werden, **dadurch gekennzeichnet, dass**
- bei einem ersten Schritt die technische Vorderfläche (22) an einem der Unterbauelemente positioniert wird,
- bei einem zweiten Schritt die technische Vorderfläche (22) durch ein Schwenken um eine Querachse (A) aus einer Position, in der sie sich im Wesentlichen quer erstreckt, in eine Position geht, in der sie nach vorne gekippt ist,
- bei einem dritten Schritt die Unterbauelemente und die technische Vorderfläche (22) in der gekippten Position vertikal von unten nach oben bis zum Fahrzeug verschoben werden und
- bei einem vierten Schritt die technische Vorderfläche (22) aus ihrer gekippten Position in ihre normale Position zurückgeklappt wird, in der sie dem vorderen Strukturelement (10) des Fahrzeugs gegenüberliegt.

2. Montageverfahren nach Anspruch 1, **dadurch gekennzeichnet, dass** vor dem vierten Schritt ein Zwischenschritt vorgesehen ist, bei dem die technische Vorderfläche (22) bereits in der gekippten Position gehalten wird.

3. Montageverfahren nach Anspruch 1, **dadurch gekennzeichnet, dass** das die technische Vorderfläche (22) tragende Unterbauelement ein unterer Querträger (18) ist, der dazu bestimmt ist, unter dem vorderen Strukturelement (10) am Ende der Längsträger (12) befestigt zu werden.

4. Montageverfahren nach einem der vorhergehenden Ansprüche, **dadurch gekennzeichnet, dass** ein fünfter Schritt vorgesehen ist, bei dem die technische Vorderfläche (22) an den Längsträgern (12) befestigt wird.

5. Vorrichtung zur Durchführung des Verfahrens nach einem der vorhergehenden Ansprüche, **dadurch gekennzeichnet, dass** sie mindestens Folgendes umfasst:
- ein vertikal bewegliches Montagewerkzeug (30), das dazu bestimmt ist, die Unterbauelemente und die technische Vorderfläche (22) aufzunehmen, und
- ein Mittel, um die technische Vorderfläche (22) in der gekippten Position zu halten.

6. Vorrichtung nach Anspruch 5, **dadurch gekennzeichnet, dass** das Mittel zum Halten der technischen Vorderfläche (22) mindestens ein beweglicher Arm ist, der geeignet ist, die technische Vorderfläche beim vierten Schritt des Verfahrens automatisch zurück in die normale Position zu klappen.
